# EUROPEAN PATENT APPLICATION

(11) **EP 4 832 122 A1**
(43) Date of publication of application: **28.10.2026**
(21) Application number: 24907252.1
(22) Date of filing: 10.12.2024
(51) Int. Cl.: H01M 8/0213, H01M 8/0221, H01M 8/0226, H01M 8/10

(54) **SEPARATOR FOR FUEL CELLS**

(30) Priority: 21.12.2023 JP 2023215830
(71) Applicant: Nisshinbo Chemical Inc., Tokyo 103-8650 (JP)
(72) Inventor: TANNO, Fumio, Chiba-city, Chiba 267-0056 (JP)
(74) Representative: Mewburn Ellis LLP
(86) International application number: PCT/JP2024/043659
(87) International publication number: WO 2025/134867

(57) **Abstract**

This separator for fuel cells, which is obtained by molding a resin composition that contains a graphite powder having a cumulative particle diameter distribution d10 of 10-20 µm and a volume porosity of 12-30 cm³/100 g as measured by ASTM D6086 at a measurement pressure of 30 MPa, and an epoxy resin component containing a main agent, a curing agent, and a curing accelerator, is excellent in terms of hydrogen gas impermeability, electrical conductivity, and mechanical characteristics even if obtained by compression molding in a short time.

## Description

### TECHNICAL FIELD

The present invention relates to a fuel cell separator.

### BACKGROUND ART

One role of the fuel cell separator is to confer each unit cell with electrical conductivity. In addition, separators provide flow channels for the supply of fuel and air (oxygen) to the unit cells and also serve as boundary walls separating the unit cells.

Properties required of a separator thus include high electrical conductivity, high gas impermeability, chemical stability, heat resistance and hydrophilicity.

Regarding the improvement of these properties, for example, Patent Document 1 proposes a fuel cell separator in which a plurality of composite sheets and a resin composition are welded together to suppress gas permeability while improving both mechanical strength and electrical conductivity.

Further, Patent Document 2 proposes a fuel cell separator including a plate containing granular or fibrous graphite and granular or fibrous resin as constituent materials, and a barrier layer having gas barrier properties superior to those of the plate, to suppress gas permeation.

However, the fuel cell separator of Patent Document 1, in which a plurality of composite sheets and a resin composition are welded together to suppress gas permeability, still has a hydrogen gas permeability coefficient at a measurement temperature of 80°C of 1.1×10⁻¹³ to 6.8×10⁻¹³ mol·m/m²·Pa·sec, and so its hydrogen gas impermeability is inadequate.

On the other hand, in Patent Document 2, although gas impermeability is suppressed by providing a barrier layer with excellent gas barrier properties, there is a problem that the molding time for the separator is as long as 1 to 6 minutes, resulting in poor production efficiency.

### PRIOR ART DOCUMENTS

### PATENT DOCUMENTS

Patent Document 1: JP-A 2020-145014
Patent Document 2: WO 2023/286332

### SUMMARY OF INVENTION

### TECHNICAL PROBLEM

It is therefore an object of this invention to provide a fuel cell separator which is excellent in hydrogen gas impermeability, electrical conductivity and mechanical properties even by compression molding for a short period of time.

### SOLUTION TO PROBLEM

The inventor has conducted extensive investigations in order to achieve this object. As a result, the inventor has discovered that, by using a composition containing graphite powder having specific properties and an epoxy resin component, a fuel cell separator excellent in hydrogen gas impermeability, electrical conductivity and mechanical properties can be obtained even by compression molding in a short period of time.

Accordingly, the invention provides:
1. A fuel cell separator which is obtained by molding a resin composition comprising graphite powder and an epoxy resin component that includes a base resin, a curing agent and a curing accelerator, wherein the graphite powder has a cumulative particle size distribution d10 of from 10 to 20 µm and a volumetric void fraction measured in accordance with ASTM D6086 of from 12 to 30 cm³/100g under an applied pressure of 30 MPa;
2. The fuel cell separator according to 1 above, wherein the graphite powder has a powder resistance of less than 3.0 mΩ·cm under an applied pressure of 30 MPa;
3. The fuel cell separator according to 1 above, wherein the graphite powder has a springback of from 13 to 50%;
4. The fuel cell separator according to 1 above, wherein the base resin of the epoxy resin is at least one selected from the group consisting of cresol-novolak epoxy resins and biphenyl epoxy resins;
5. The fuel cell separator according to 1 above, wherein the curing agent of the epoxy resin is novolak phenolic resins;
6. The fuel cell separator according to 1 above, wherein the curing accelerator includes an imidazole compound having a phenyl group at the 2 position;
7. The fuel cell separator according to 1 above, wherein the resin composition comprises from 20 to 42 parts by weight of the epoxy resin component per 100 parts by weight of the graphite powder;
8. The fuel cell separator according to any one of 1 to 7 above, which has a hydrogen permeability coefficient at a measurement temperature of 80°C of less than 1.7×10⁻¹⁶ mol·m/m²·Pa·sec and a resistivity of less than 23 mΩ·cm²;
9. The fuel cell separator according to any one of 1 to 7 above, which has a flexural strength of 44 MPa or more and a flexural modulus of less than 13 GPa; and
10. A method for producing a fuel cell separator, comprising compression molding a resin composition for a compression time of 40 seconds or less, the resin composition comprising graphite powder and an epoxy resin component that includes a base resin, a curing agent and a curing accelerator, wherein the graphite powder has a cumulative particle size distribution d10 of from 10 to 20 µm and a volumetric void fraction measured in accordance with ASTM D6086 of from 12 to 30 cm³/100g under an applied pressure of 30 MPa.

### ADVANTAGEOUS EFFECTS OF INVENTION

Because the fuel cell separator of the invention uses a composition including graphite powder that is easy to compression pack and has a low volumetric void fraction, the separator has excellent hydrogen gas impermeability, electrical conductivity and mechanical properties even by compression molding for a short time of 40 seconds or less.

Moreover, by using a graphite powder having a low powder resistance, the electrical conductivity of the resulting fuel cell separator can be further improved.

Furthermore, by using graphite powder having a specific springback (elastic recovery), the mechanical properties of the resulting fuel cell separator can be further improved.

In particular, a fuel cell separator using graphite powder having three properties of specific springback, volumetric void fraction and powder resistance is excellent in hydrogen gas impermeability, electrical conductivity and mechanical properties even by compression molding for a short time of 30 seconds or less.

### BRIEF DESCRIPTION OF DRAWINGS

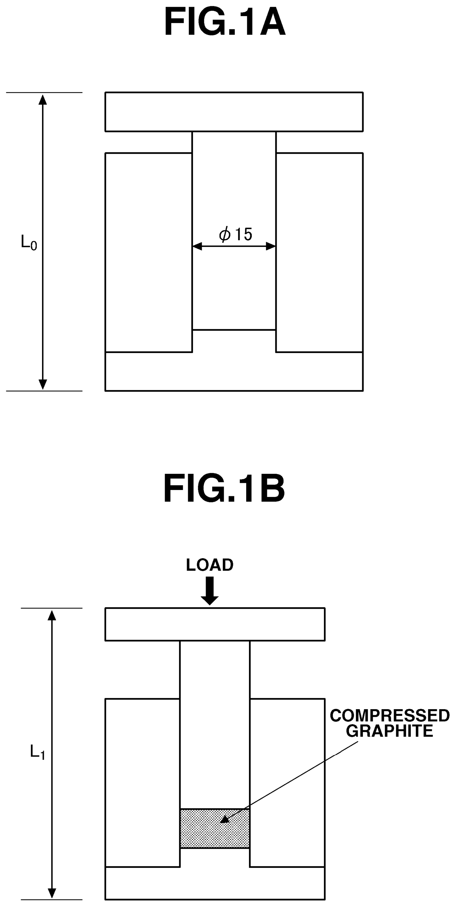

[FIG. 1] FIG. 1 shows schematic side views of a die that may be used to measure the springback of graphite powder.

### DESCRIPTION OF EMBODIMENTS

The invention is described more fully below.

The fuel cell separator according to the invention is obtained by molding a resin composition including graphite powder and an epoxy resin component that contains a base resin, a curing agent and a curing accelerator, wherein the graphite powder has a cumulative particle size distribution d10 of from 10 to 20 µm and a volumetric void fraction as measured in accordance with ASTM D6086 of from 12 to 30 cm³/100g under an applied pressure of 30 MPa.

In the invention, the cumulative particle size distribution d10 of the graphite powder is from 10 to 20 µm, preferably from 12 to 16 µm, and more preferably from 13 to 15 µm. At an average particle size d10 below 10 µm, the epoxy resin readily covers the surfaces of the graphite powder and the surface area of contact between the particles becomes small, as a result of which the electrical conductivity of the separator itself worsens. On the other hand, at an average particle size d10 greater than 20 µm, the surface area of contact between the graphite particles and the epoxy resin becomes small, which may result in poor gas impermeability of the separator.

The average particle size d10 in the invention is a value measured by a wet method using a particle size distribution analyzer (MT3000, from MicrotracBEL Corp.).

The volumetric void fraction of the graphite powder as measured in accordance with ASTM D6086 is preferably 30 cm³/100g or less under an applied pressure of 30 MPa, because sufficient gas impermeability can be obtained. At a volumetric void fraction greater than 30 cm³/100g, a large amount of resin is required to fill the voids between the particles of the graphite powder, which may result in poor electrical conductivity of the separator.

At a volumetric void fraction below 12 m³/100g, the graphite powder is packed too densely, which may result in loss of flexibility of the separator.

The volumetric void fraction in the invention is a value measured under an applied pressure of 30 MPa using DVV400 from Micromeritics Instruments Corporation.

The powder resistance of the graphite powder is preferably less than 3.0 mΩ·cm under application of a measurement pressure of 30 MPa, from the viewpoint of further increasing the electrical conductivity. At a powder resistance of 3.0 mΩ·cm or more, the amount of resin added must be reduced in order to obtain the electrical conductivity of the fuel cell separator, which may result in poor gas impermeability of the separator. While a lower powder resistance is more preferable, the lower limit is usually about 1.0 mΩ·cm.

The springback of the graphite powder is preferably from 13 to 50% from the viewpoint of further increasing the gas impermeability, flexibility and productivity. At a springback greater than 50%, the voids between the particles of the graphite powder are difficult to collapse during molding of the separator, which may result in poor gas impermeability of the separator.

At a springback value below 13%, the flexibility and strength of the separator may be impaired. On the other hand, at a springback of the graphite powder greater than 50%, it takes time to collapse the voids between the particles of the graphite powder, which may result in poor productivity of the fuel cell separator.

As used herein, "springback" refers to springback by the powder itself. Specifically, as described in detail in the subsequent examples, this is the value computed as [(Y-X)/X] × 100 (%), where X is the height of the powder when charged into a specific die and compressed under a specific pressure and Y is the height of the powder when the pressure is released.

The graphite powder used in the invention is not particularly limited as to, for example, the type thereof, provided that it satisfies the volumetric void fraction as measured by ASTM D6086. Use may be made of either natural graphite or synthetic graphite.

Examples of synthetic graphite include synthetic graphite obtained by firing needle coke, synthetic graphite obtained by firing vein coke, spheroidized synthetic graphite, and synthetic graphite whose surface has been treated with a non-graphitic layer or the like by pitch coating.

On the other hand, examples of natural graphite include natural flake graphite and the like, amorphous graphite, spheroidized natural graphite, and natural graphite whose surface has been treated with a non-graphitic layer or the like by pitch coating.

In either case, the volumetric void fraction of these graphite powders may be measured, and those falling within the range specified in the present invention may be appropriately selected. These graphite powders may be used singly or in combination of two or more thereof.

The base resin within the epoxy resin component is not particularly limited, provided it has epoxy groups. Examples include o-cresol-novolak epoxy resins, phenol-novolak epoxy resins, bisphenol A epoxy resins, bisphenol F epoxy resins, biphenyl epoxy resins, biphenyl aralkyl epoxy resins, trisphenol epoxy resins, brominated epoxy resins, dicyclopentadiene epoxy resins and biphenyl-novolak epoxy resins. These may be used singly or in combination of two or more thereof. Of these, an o-cresol-novolak epoxy resin alone, a biphenyl epoxy resin alone, and mixtures thereof are preferred.

The curing agent within the epoxy resin component is not particularly limited, provided it is a phenolic resin. Specific examples include novolak phenolic resins, cresol-novolak phenolic resins, resol phenolic resins, aralkyl-modified phenolic resins, biphenyl-novolak phenolic resins and tris(phenol methane) phenolic resins. These may be used singly or in combination of two or more thereof. Of these, novolak phenolic resins are preferred.

The curing accelerator within the epoxy resin component is not particularly limited, provided it is an agent which promotes reactions between epoxy groups and the curing agent. Examples include phosphine compounds, amine compounds and imidazole compounds. Of these, the use of an imidazole compound having an aryl group at the 2 position is preferred. Specific examples of the aryl group include phenyl, tolyl and naphthyl groups; a phenyl group is preferred. Specific examples of imidazole compounds having an aryl group at the 2 position include 2-phenylimidazole and 2-phenyl-4-methylimidazole.

When an imidazole compound having a short-chain alkyl group such as 2-methylimidazole is used as the curing accelerator, the curing time may be too rapid, making uniform molding impossible. On the other hand, when an imidazole compound having a long-chain alkyl group such as 2-undecylimidazole is used, the curing time is too slow, and so the molding time may be long.

In addition to the above ingredients, optional ingredients such as an internal mold release agent may be suitably included in the composition used in this invention.

The internal mold release agent is suitably selected from various types of internal mold release agents that have hitherto been used in molding separators. Specific examples include stearic acid wax, amide wax, montanic acid wax, carnauba wax and polyethylene wax. These may be used singly or in combination of two or more thereof.

The amount of epoxy resin component (base resin, curing agent and curing accelerator) included in the composition used in the invention, although not particularly limited, is preferably from 20 to 42 parts by weight, more preferably from 27 to 35 parts by weight, and even more preferably from 30 to 33 parts by weight, per 100 parts by weight of the graphite powder.

In this case, it is preferable to include from 0.98 to 1.08 equivalent, and more preferable to include from 0.99 to 1.05 equivalent, of the curing agent with respect to the base resin.

The amount of curing accelerator used, although not particularly limited, is preferably from 0.1 to 5.0 parts by weight, and more preferably from 0.5 to 2.0 parts by weight, per 100 parts by weight of the mixture of the base resin and the curing agent.

By setting the amount of epoxy resin component used within this range, the flowability of the molding material becomes appropriate, resulting in good moldability, and the gas impermeability and electrical conductivity of the resulting fuel cell separator also become even better.

When an internal mold release agent is used, the amount thereof, although not particularly limited, is preferably from 0.01 to 3.0 parts by weight, and more preferably from 0.05 to 1.5 parts by weight, per 100 parts by weight of the graphite powder.

The composition used in the invention may be prepared by, for example, mixing the graphite powder, the base resin, the curing agent and the curing accelerator in any order and in the prescribed proportions. Illustrative examples of mixers that may be used for such mixing include planetary mixers, ribbon blenders, Loedige mixers, Henschel mixers, rocking mixers and Nauta mixers.

In cases where an internal mold release agent is used, it too may be added in any order.

The fuel cell separator of the invention is preferably obtained by charging the above composition into a given mold and compression molding. The mold used is exemplified by a mold for fuel cell separator production that is capable of forming, on one or both sides of the molded body, grooves to serve as gas flow channels.

The compression molding conditions, although not particularly limited, are typically a mold temperature of between 150°C and 190°C and a molding pressure of between 30 MPa and 60 MPa, preferably between 30 MPa and 50 MPa.

The compression molding time is not particularly limited and can be suitably set to from about 3 seconds to about one hour. However, from the viewpoint of production efficiency, a short time is preferred, specifically 40 seconds or less is preferred, and 30 seconds or less is more preferred. In particular, in the invention, by using the graphite powder having the above springback, a fuel cell separator having good properties can be obtained even when molded for a short time of 30 seconds or less.

After compression molding, heating at between 150°C and 200°C for a period of between about 1 minute and about 600 minutes may be carried out to promote thermosetting.

In this invention, the fuel cell separator (molded body) obtained by compression molding may be subjected to surface roughening treatment in order to remove the skin layer and adjust the surface roughness, for example.

The surface roughening technique is not particularly limited and may be suitably selected from among various known surface roughening methods, such as blasting and polishing. Air blasting, wet blasting, barrel polishing and brush polishing are preferred, blasting using an abrasive is more preferred, and wet blasting is even more preferred.

The abrasive used in blasting at this time has an average particle size (d = 50) of preferably from 3 to 30 µm, more preferably from 4 to 25 µm, and even more preferably from 5 to 20 µm.

The material making up the abrasive used in blasting, although not particularly limited, may be, for example, alumina, silicon carbide, zirconia, glass, nylon or stainless steel. These may be used singly or in combination of two or more thereof.

The discharge pressure during wet blasting varies according to, for example, the particle size of the abrasive, and therefore cannot be strictly specified. However, the discharge pressure is preferably between 0.1 and 1.0 MPa, and more preferably between 0.15 and 0.5 MPa.

In the fuel cell separator of the invention, from the viewpoint of maintaining hydrogen impermeability while reducing the thickness of the fuel cell separator, the hydrogen permeability coefficient at a measurement temperature of 80°C is preferably less than 1.7×10⁻¹⁶ mol·m/m²·Pa·sec, and more preferably 1.5×10⁻¹⁶ mol·m/m²·Pa·sec or less. While a smaller hydrogen permeability coefficient is more preferable, the lower limit is usually about 0.1×10⁻¹⁶ mol·m/m²·Pa·sec.

Moreover, from the viewpoint of achieving higher power generation performance of the fuel cell, the resistivity is preferably less than 23 mΩ·cm, and more preferably 20 mΩ·cm or less. While a smaller resistivity is more preferable, the lower limit is usually about 5.0 mΩ·cm.

Furthermore, the flexural strength is preferably 44 MPa or more, and the flexural modulus is preferably less than 13 GPa. The upper limit of the flexural strength, although not particularly limited, is preferably 100 MPa or less, and the lower limit of the flexural modulus, although not particularly limited, is preferably 5.0 GPa or more.

Fuel cells equipped with the inventive fuel cell separator having such properties are able to maintain a stable power generating efficiency over a long period of time.

A solid polymer fuel cell is generally composed of a stack of many unit cells, each of which is constructed of a solid polymer membrane disposed between a pair of electrodes that are in turn sandwiched between a pair of separators which form flow channels for the supply and removal of gases. The fuel cell separator of the invention may be used as some or all of the plurality of separators in the fuel cell.

### EXAMPLES

Examples and Comparative Examples are given below by way of illustration, although the invention is not limited by these Examples. The properties in the Examples were measured by the following methods.

### [1] Cumulative Particle Size Distribution d10

Measured by a wet method using a particle size distribution analyzer (MT3000, from MicrotracBEL Corp.).

### Volumetric Void Fraction

The volumetric void fraction under the applied pressure of 30 MPa was measured using DVV400 from Micromeritics Instruments Corporation.

### [3] Springback

Two grams of graphite powder as the measurement sample was placed in the die having an inner diameter of 15 mm shown in FIG. 1A and the top surface of the sample was flattened, following which the powder was compressed by using a press to apply a 5.4-ton load to the punch over a period of 5 seconds (see FIG. 1B). The compressed state was held for 30 seconds, after which the load was quickly released. The height at the top of the punch was measured in each state with a height gauge and the springback was determined using the following formula.

| | |
|---|---|
| L₀: | Height of punch when die contains no sample (mm) |
| L₁: | Height of punch when load has been applied (mm) |
| L₂: | Height of punch when load has been released (mm) |

$Springback \left(%\right) = \left[\left({L}_{2}-{L}_{1}\right)/\left({L}_{1}-{L}_{0}\right)\right] \times 100$

### [4] Powder Resistance

The powder resistance under application of a pressure of 30 MPa was measured using a powder resistance measurement system (MCP-PD51, from Mitsubishi Chemical Analytech Co., Ltd.).

### [5] Hydrogen Permeability Coefficient

The hydrogen permeability coefficient at a measurement temperature of 80°C was measured by a differential pressure type gas chromatography method in accordance with JIS K 7126-1 (differential pressure method).

### [6] Resistivity

Measured based on JIS H0602 (Method for Measuring Resistivity of Silicon Single Crystals and Silicon Wafers Using Four-Point Probe).

### [7] Strength Tests (Flexural Strength, Flexural Modulus)

Using 100 × 20 × 2 mm test specimens cut from a separator, three-point bending tests were carried out in accordance with JIS K 6911 ("General Test Methods for Thermosetting Plastics") at a span between the support points of 40 mm, and the flexural strength and flexural modulus were measured.

### [Example 1]

A resin composition for fuel cell separators was prepared by charging a Henschel mixer with 100 parts by weight of Graphite Powder 1 having the following properties and an epoxy resin component consisting of 20.4 parts by weight of Epoxy Resin 1 (o-cresol-novolak-type; epoxy equivalent weight, 198 g/eq), 10.8 parts by weight of phenolic resin (novolak-type; hydroxyl equivalent weight, 104 g/eq), and 0.25 part by weight of 2-phenylimidazole, and mixing these ingredients together for 3 minutes at 800 rpm.

The resulting composition was charged into a mold for producing fuel cell separators and compression molded at a mold temperature of 185°C, a molding pressure of 36.6 MPa and a molding time of 15 seconds, thereby giving a dense molded body with dimensions of 240 mm × 240 mm × 2 mm and having gas flow channels.

Next, the entire surface of the resulting dense molded body was subjected to roughening treatment by wet blasting using alumina abrasive grit (average particle size d50, 6 µm) under the following conditions: discharge pressure, 0.25 MPa; transport speed, 1.5 m/min, thereby obtaining a fuel cell separator.

| | |
|---|---|
| Graphite Powder 1: | Synthetic graphite, needle |
| Cumulative particle size distribution d10: | 13.0 µm |
| Volumetric void fraction: | 17.8 cm³/100g |
| Springback: | 30.1% |
| Powder resistance: | 2.32 mΩ·cm |

### [Example 2]

Aside from changing Graphite Powder 1 to Graphite Powder 2 having the following properties, a composition was prepared and compression molded in the same way as in Example 1, giving a fuel cell separator.

| | |
|---|---|
| Graphite Powder 2: | Synthetic graphite, vein |
| Cumulative particle size distribution d10: | 14.9 µm |
| Volumetric void fraction: | 13.7 cm³/100g |
| Springback: | 36.8% |
| Powder resistance: | 2.42 mΩ·cm |

### [Example 3]

Aside from changing Graphite Powder 1 to Graphite Powder 3 having the following properties, a composition was prepared in the same way as in Example 1; aside from changing the molding time from 15 seconds to 30 seconds, compression molding was further performed in the same way as in Example 1, giving a fuel cell separator.

| | |
|---|---|
| Graphite Powder 3: | Synthetic graphite, vein |
| Cumulative particle size distribution d10: | 19.5 µm |
| Volumetric void fraction: | 29.6 cm³/100g |
| Springback: | 45.8% |
| Powder resistance: | 2.97 mΩ·cm |

### [Example 4]

Aside from changing Graphite Powder 1 to Graphite Powder 4 having the following properties, a composition was prepared and compression molded in the same way as in Example 1, giving a fuel cell separator.

| | |
|---|---|
| Graphite Powder 4: | Synthetic graphite, needle, surface layer coated with non-graphitic layer |
| Cumulative particle size distribution d10: | 11.1 µm |
| Volumetric void fraction: | 12.5 cm³/100g |
| Springback: | 29.9% |
| Powder resistance: | 1.80 mΩ·cm |

### [Example 5]

Aside from changing Graphite Powder 1 to Graphite Powder 5 having the following properties, a composition was prepared and compression molded in the same way as in Example 1, giving a fuel cell separator.

| | |
|---|---|
| Graphite Powder 5: | Natural graphite, flakes |
| Cumulative particle size distribution d10: | 11.0 µm |
| Volumetric void fraction: | 13.0 cm³/100g |
| Springback: | 15.3% |
| Powder resistance: | 2.98 mΩ·cm |

### [Example 6]

Aside from changing Graphite Powder 1 (100 parts by weight) to a combination of Graphite Powder 2 (80 parts by weight) and Graphite Powder 4 (20 parts by weight), a composition was prepared and compression molded in the same way as in Example 1, giving a fuel cell separator.

### [Example 7]

Aside from changing Graphite Powder 1 (100 parts by weight) to a combination of Graphite Powder 2 (60 parts by weight) and Graphite Powder 4 (40 parts by weight), a composition was prepared and compression molded in the same way as in Example 1, giving a fuel cell separator.

### [Example 8]

Aside from changing Graphite Powder 1 (100 parts by weight) to a combination of Graphite Powder 3 (80 parts by weight) and Graphite Powder 5 (20 parts by weight), a composition was prepared and compression molded in the same way as in Example 1, giving a fuel cell separator.

### [Example 9]

Aside from changing Graphite Powder 1 (100 parts by weight) to a combination of Graphite Powder 3 (60 parts by weight) and Graphite Powder 5 (40 parts by weight), a composition was prepared and compression molded in the same way as in Example 1, giving a fuel cell separator.

### [Example 10]

Aside from changing Graphite Powder 1 (100 parts by weight) to a combination of Graphite Powder 2 (80 parts by weight) and Graphite Powder 9 having the following properties (20 parts by weight), a composition was prepared and compression molded in the same way as in Example 1, giving a fuel cell separator.

| | |
|---|---|
| Graphite Powder 9: | Synthetic graphite, needle |
| Cumulative particle size distribution d10: | 18.5 µm |
| Volumetric void fraction: | 10.2 cm³/100g |
| Springback: | 14.1% |
| Powder resistance: | 1.53 mΩ·cm |

### [Example 11]

Aside from changing Graphite Powder 1 (100 parts by weight) to a combination of Graphite Powder 2 (60 parts by weight) and Graphite Powder 9 (40 parts by weight), a composition was prepared and compression molded in the same way as in Example 1, giving a fuel cell separator.

### [Example 12]

Aside from changing Graphite Powder 1 (100 parts by weight) to a combination of Graphite Powder 2 (80 parts by weight) and Graphite Powder 10 having the following properties (20 parts by weight), a composition was prepared and compression molded in the same way as in Example 1, giving a fuel cell separator.

| | |
|---|---|
| Graphite Powder 10: | Natural graphite, spherical, surface layer coated with non-graphitic layer |
| Cumulative particle size distribution d10: | 10.2 µm |
| Volumetric void fraction: | 32.6 cm³/100g |
| Springback: | 20.0% |
| Powder resistance: | 1.64 mΩ·cm |

### [Example 13]

Aside from changing Graphite Powder 1 (100 parts by weight) to a combination of Graphite Powder 2 (60 parts by weight) and Graphite Powder 10 (40 parts by weight), a composition was prepared and compression molded in the same way as in Example 1, giving a fuel cell separator.

### [Example 14]

Aside from changing Graphite Powder 1 (100 parts by weight) to a combination of Graphite Powder 4 (40 parts by weight) and Graphite Powder 10 (60 parts by weight), a composition was prepared and compression molded in the same way as in Example 1, giving a fuel cell separator.

### [Example 15]

Aside from changing Graphite Powder 1 to Graphite Powder 11 having the following properties, a composition was prepared in the same way as in Example 1. Furthermore, aside from changing the molding time from 15 seconds to 31 seconds, compression molding was performed in the same way as in Example 1, giving a fuel cell separator. Note that a fuel cell separator could not be obtained when the compression molding time was 30 seconds or less.

| | |
|---|---|
| Graphite Powder 11: | Synthetic graphite, vein |
| Cumulative particle size distribution d10: | 12.4 µm |
| Volumetric void fraction: | 29.9 cm³/100g |
| Springback: | 50.2% |
| Powder resistance: | 2.56 mΩ·cm |

### [Example 16]

Aside from changing Graphite Powder 1 to Graphite Powder 12 having the following properties, a composition was prepared and compression molded in the same way as in Example 1, giving a fuel cell separator.

| | |
|---|---|
| Graphite Powder 12: | Natural graphite, flakes |
| Cumulative particle size distribution d10: | 10.4 µm |
| Volumetric void fraction: | 12.1 cm³/100g |
| Springback: | 13.9% |
| Powder resistance: | 3.03 mΩ·cm |

### [Comparative Example 1]

Aside from changing Graphite Powder 1 to Graphite Powder 6 having the following properties, a composition was prepared and compression molded in the same way as in Example 1, giving a fuel cell separator.

| | |
|---|---|
| Graphite Powder 6: | Synthetic graphite, needle |
| Cumulative particle size distribution d10: | 5.80 µm |
| Volumetric void fraction: | 12.7 cm³/100g |
| Springback: | 25.1% |
| Powder resistance: | 5.22 mΩ·cm |

### [Comparative Example 2]

Aside from changing Graphite Powder 1 to Graphite Powder 7 having the following properties, a composition was prepared in the same way as in Example 1. Furthermore, aside from changing the molding time from 15 seconds to 70 seconds, compression molding was performed in the same way as in Example 1, giving a fuel cell separator. Note that a fuel cell separator could not be obtained when the compression molding time was 40 seconds or less.

| | |
|---|---|
| Graphite Powder 7: | Synthetic graphite, vein |
| Cumulative particle size distribution d10: | 25.4 µm |
| Volumetric void fraction: | 35.2 cm³/100g |
| Springback: | 55.8% |
| Powder resistance: | 1.99 mΩ·cm |

### [Comparative Example 3]

Aside from changing Graphite Powder 1 to Graphite Powder 8 having the following properties, a composition was prepared and compression molded in the same way as in Example 1, giving a fuel cell separator.

| | |
|---|---|
| Graphite Powder 8: | Synthetic graphite, needle |
| Cumulative particle size distribution d10: | 30.6 µm |
| Volumetric void fraction: | 40.2 cm³/100g |
| Springback: | 31.2% |
| Powder resistance: | 2.01 mΩ·cm |

### [Comparative Example 4]

Aside from changing Graphite Powder 1 to Graphite Powder 9 having the following properties, a composition was prepared and compression molded in the same way as in Example 1, giving a fuel cell separator.

| | |
|---|---|
| Graphite Powder 9: | Synthetic graphite, needle |
| Cumulative particle size distribution d10: | 18.5 µm |
| Volumetric void fraction: | 10.2 cm³/100g |
| Springback: | 14.1% |
| Powder resistance: | 1.53 mΩ·cm |

### [Comparative Example 5]

Aside from changing Graphite Powder 1 to Graphite Powder 10 having the following properties, a composition was prepared and compression molded in the same way as in Example 1, giving a fuel cell separator.

| | |
|---|---|
| Graphite Powder 10: | Natural graphite, spherical, surface layer coated with non-graphitic layer |
| Cumulative particle size distribution d10: | 10.2 µm |
| Volumetric void fraction: | 32.6 cm³/100g |
| Springback: | 20.0% |
| Powder resistance: | 1.64 mΩ·cm |

### [Comparative Example 6]

Aside from changing Graphite Powder 1 (100 parts by weight) to a combination of Graphite Powder 4 (40 parts by weight) and Graphite Powder 6 (60 parts by weight), a composition was prepared and compression molded in the same way as in Example 1, giving a fuel cell separator.

### [Example 17]

Aside from changing, in Example 1, the added amount of Epoxy Resin 1 from 20.4 parts by weight to 14.4 parts by weight, the added amount of the phenolic resin from 10.8 parts by weight to 7.7 parts by weight, and the added amount of 2-phenylimidazole from 0.25 part by weight to 0.20 part by weight, a composition was prepared and compression molded in the same way as in Example 1, giving a fuel cell separator.

### [Example 18]

Aside from changing, in Example 1, the added amount of Epoxy Resin 1 from 20.4 parts by weight to 26.0 parts by weight, the added amount of the phenolic resin from 10.8 parts by weight to 13.9 parts by weight, and the added amount of 2-phenylimidazole from 0.25 part by weight to 0.36 part by weight, a composition was prepared and compression molded in the same way as in Example 1, giving a fuel cell separator.

### [Example 19]

Aside from changing, in Example 1, 20.4 parts by weight of Epoxy Resin 1 to 21.0 parts by weight of Epoxy Resin 2, the added amount of the phenolic resin from 10.8 parts by weight to 13.4 parts by weight, and the added amount of 2-phenylimidazole from 0.25 part by weight to 0.31 part by weight, a composition was prepared and compression molded in the same way as in Example 1, giving a fuel cell separator.

| | |
|---|---|
| Epoxy Resin 2: | Biphenyl epoxy resin |
| Epoxy equivalent weight: | 165 g/eq |

### [Example 20]

Aside from changing, in Example 1, 20.4 parts by weight of Epoxy Resin 1 to a combination of 11.0 parts by weight of Epoxy Resin 1 and 10.0 parts by weight of Epoxy Resin 2, the added amount of the phenolic resin from 10.8 parts by weight to 12.3 parts by weight, and the added amount of 2-phenylimidazole from 0.25 part by weight to 0.30 part by weight, a composition was prepared and compression molded in the same way as in Example 1, giving a fuel cell separator.

### [Example 21]

Aside from changing, in Example 1, the added amount of Epoxy Resin 1 from 20.4 parts by weight to 13.1 parts by weight, the added amount of the phenolic resin from 10.8 parts by weight to 7.0 parts by weight, and the added amount of 2-phenylimidazole from 0.25 part by weight to 0.19 part by weight, a composition was prepared and compression molded in the same way as in Example 1, giving a fuel cell separator.

### [Example 22]

Aside from changing, in Example 1, the added amount of Epoxy Resin 1 from 20.4 parts by weight to 27.0 parts by weight, the added amount of the phenolic resin from 10.8 parts by weight to 14.4 parts by weight, and the added amount of 2-phenylimidazole from 0.25 part by weight to 0.37 part by weight, a composition was prepared and compression molded in the same way as in Example 1, giving a fuel cell separator.

The hydrogen permeability coefficients, resistivities, flexural strengths, and flexural moduli were measured for the fuel cell separators produced in Examples 1 to 22 and Comparative Examples 1 to 6. These results are shown in Tables 1 and 2. Note that Table 1 also shows the properties of the graphite powders used, and Table 2 also shows the added amounts of the epoxy resin components.

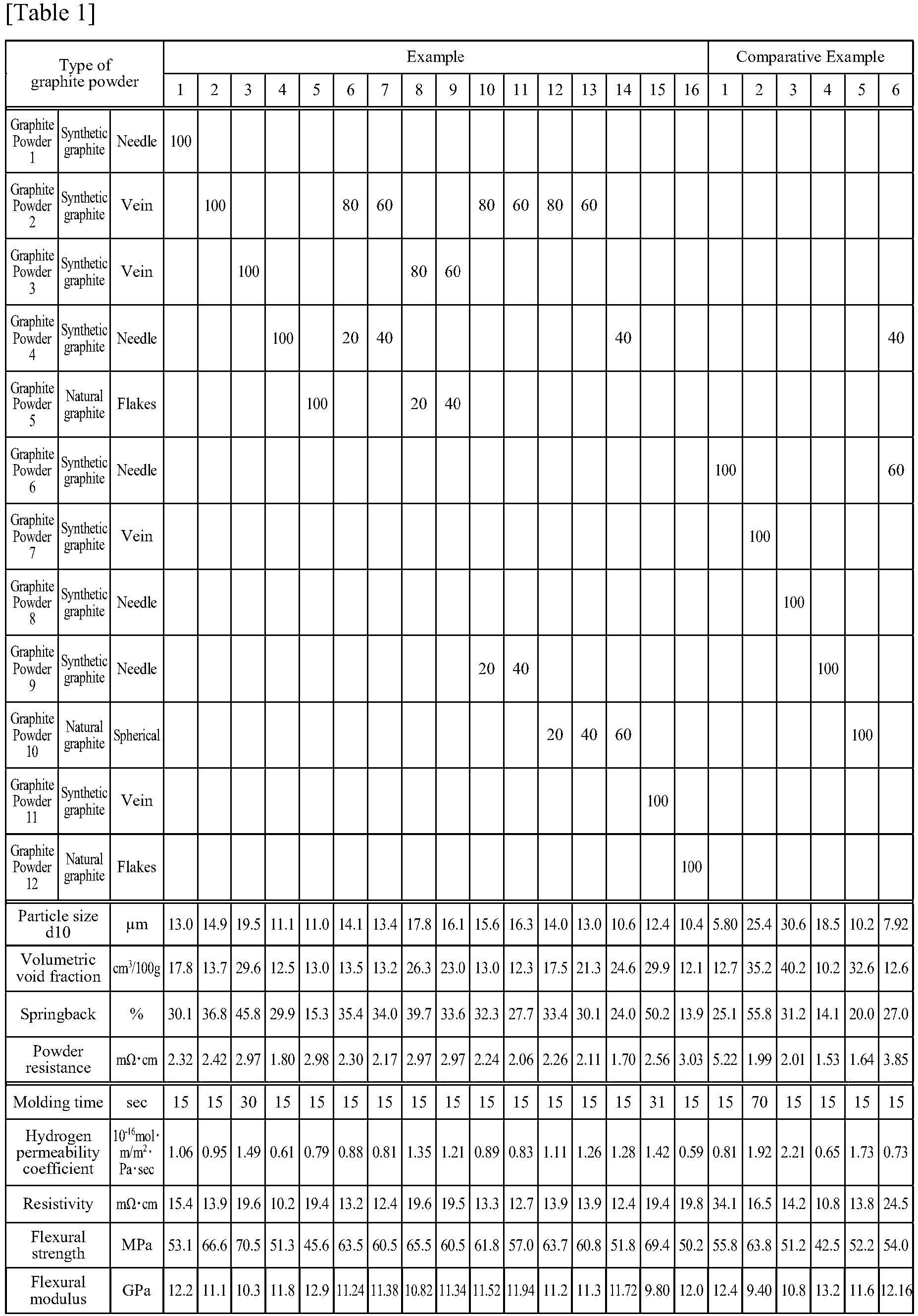

**[Table 2]**

| | | Example | | | | | | |
|---|---|---|---|---|---|---|---|---|
| | | 1 | 17 | 18 | 19 | 20 | 21 | 22 |
| Epoxy Resin 1 | O-cresol-novolak epoxy | 20.4 | 14.4 | 26.0 | | 11.0 | 13.1 | 27.0 |
| Epoxy Resin 2 | Biphenyl epoxy | | | | 21.0 | 10.0 | | |
| Phenolic resin | Novolak phenolic | 10.8 | 7.7 | 13.9 | 13.4 | 12.3 | 7.0 | 14.4 |
| Curing accelerator | 2-Phenylimidazole | 0.25 | 0.20 | 0.36 | 0.31 | 0.30 | 0.19 | 0.37 |
| Hydrogen permeability coefficient | 10⁻¹⁶mol·m/m²·Pa·sec | 1.06 | 1.49 | 0.83 | 0.95 | 0.99 | 1.66 | 0.79 |
| Resistivity | mΩ·cm | 15.4 | 10.3 | 19.4 | 17.1 | 16.3 | 10.1 | 22.6 |
| Flexural strength | MPa | 53.1 | 46.2 | 57.5 | 54.1 | 53.8 | 44.3 | 58.2 |
| Flexural modulus | GPa | 12.2 | 12.4 | 11.8 | 12.2 | 12.1 | 12.5 | 11.6 |

As shown in Tables 1 and 2, the fuel cell separators of Examples 1 to 22 obtained from the fuel cell separator resin compositions within the range specified in the invention exhibited values suitable for fuel cell separators, with a hydrogen permeability at a measurement temperature of 80°C of less than 1.7×10⁻¹⁶ mol·m/m²·Pa·sec, a resistivity of less than 23 mΩ·cm, a flexural strength of 44 MPa or more, and a flexural modulus of less than 13 GPa, even with a short molding time of 40 seconds or less, specifically 15 to 31 seconds.

## Claims

1. A fuel cell separator which is obtained by molding a resin composition comprising graphite powder and an epoxy resin component that includes a base resin, a curing agent and a curing accelerator, wherein the graphite powder has a cumulative particle size distribution d10 of from 10 to 20 µm and a volumetric void fraction measured in accordance with ASTM D6086 of from 12 to 30 cm³/100g under an applied pressure of 30 MPa.

2. The fuel cell separator according to claim 1, wherein the graphite powder has a powder resistance of less than 3.0 mΩ·cm under an applied pressure of 30 MPa.

3. The fuel cell separator according to claim 1, wherein the graphite powder has a springback of from 13 to 50%.

4. The fuel cell separator according to claim 1, wherein the base resin of the epoxy resin is at least one selected from the group consisting of cresol-novolak epoxy resins and biphenyl epoxy resins.

5. The fuel cell separator according to claim 1, wherein the curing agent of the epoxy resin is novolak phenolic resins.

6. The fuel cell separator according to claim 1, wherein the curing accelerator includes an imidazole compound having a phenyl group at the 2 position.

7. The fuel cell separator according to claim 1, wherein the resin composition comprises from 20 to 42 parts by weight of the epoxy resin component per 100 parts by weight of the graphite powder.

8. The fuel cell separator according to any one of claims 1 to 7, which has a hydrogen permeability coefficient at a measurement temperature of 80°C of less than 1.7×10⁻¹⁶ mol·m/m²·Pa·sec and a resistivity of less than 23 mΩ·cm².

9. The fuel cell separator according to any one of claims 1 to 7, which has a flexural strength of 44 MPa or more and a flexural modulus of less than 13 GPa.

10. A method for producing a fuel cell separator, comprising compression molding a resin composition for a compression time of 40 seconds or less, the resin composition comprising graphite powder and an epoxy resin component that includes a base resin, a curing agent and a curing accelerator, wherein the graphite powder has a cumulative particle size distribution d10 of from 10 to 20 µm and a volumetric void fraction measured in accordance with ASTM D6086 of from 12 to 30 cm³/100g under an applied pressure of 30 MPa.
